# EUROPEAN PATENT APPLICATION

(11) **EP 4 628 712 A1**
(43) Date of publication of application: **08.10.2025**
(21) Application number: 25161379.0
(22) Date of filing: 03.03.2025
(51) Int. Cl.: F01N 3/20, F01N 3/22, F01N 3/30, F01N 3/32

(54) **PRE-HEAT SYSTEM FOR UPSTREAM ELEMENTS AND CATALYSTS OF A SELECTIVE CATALYTIC REDUCTION DEVICE**

(30) Priority: 04.04.2024 US 202463574608 P
(71) Applicant: Safety Power Inc., Mississauga ON L4W 5A1 (CA)
(72) Inventor: Stelzer, Robert M, Mississauga, L4W 5A1 (CA)
(74) Representative: Slingsby Partners LLP

(57) **Abstract**

Provided are systems and methods for pre-heating an emission reduction device including an upstream element and a selective catalytic reduction (SCR) device, the system comprising: an air blower; a heater unit in fluid communication with the air blower; a valve in fluid communication with the heater unit, the valve comprising an input, a first outlet and a second outlet; a controller connected to the air blower, the heater unit, and the valve, the controller providing a control signal to each of the air blower, the heater unit and the valve; and wherein the upstream element receives a first heating airflow from the first outlet and the SCR device receives a second heating airflow from the second outlet.

## Description

### CROSS-REFERENCE TO RELATED APPLICATIONS

The present application claims priority to US Provisional Application 63/574,608 filed April 4th, 2024.

### FIELD

The present invention relates generally to exhaust gas emission control for combustion devices such as boilers, generators and internal combustion engines. More specifically, the present invention is a system that efficiently reduces Nitrogen Oxides (NOx) emissions of the exhaust-gas flow associated with these combustion devices.

### BACKGROUND

Exhaust gas emission control has become particularly important due to stringent regulatory emission limits on boilers, generators and reciprocating engines. A typical exhaust gas after-treatment system may comprise many different individual emission reduction functions in order to meet the regulatory emission standards. More specifically, the selective catalytic reduction (SCR) device is frequently used in the exhaust system of combustion devices to eliminate particles of nitrogen oxides (NOₓ) in the exhaust gas. The SCR device is normally located in the exhaust system downstream of the combustion that takes place in a boiler, generator or reciprocating engine. The SCR device contains a SCR catalyst to reduce NOₓ, particles in the exhaust gas as the SCR catalyst must be heated before it can be used to reduce NOₓ, particles. In other words, until the SCR catalyst reaches an activation temperature, which is the minimum temperature to which the SCR catalyst must be heated, the SCR catalyst does not provide NOₓ emission reduction. Although the hot exhaust gas from the combustion in a boiler, generator or reciprocating engine heats up the SCR Catalyst, for certain applications the length of time required to heat up the SCR Catalyst using hot exhaust gas alone can be too long. For example, the testing regimen required for large backup generators may require that the generators are run on a monthly basis to ensure availability, and in large scale installations, this testing period may generate significant emissions across an installation that may exceed environmental emission limits.

SCR technology relies on a chemical reaction, which occurs between 260 - 540°C (500 - 1000F) to reduce NOx, particles in the exhaust gas. Given the large thermal mass of the SCR catalyst, a certain heat-up time is required to bring the catalyst up to the activation temperature before the emission reduction can begin.

Most emission regulations accept compliance at steady state, and in those cases, a potential 15-minute+ delay to achieve reductions is acceptable. However, certain air permits or other environmental controls may require a 1-hour average measurement or have other regulations that require a reduced delay. In these applications, the catalyst activation delay can result in non-compliance or extremely restrictive maintenance run times.

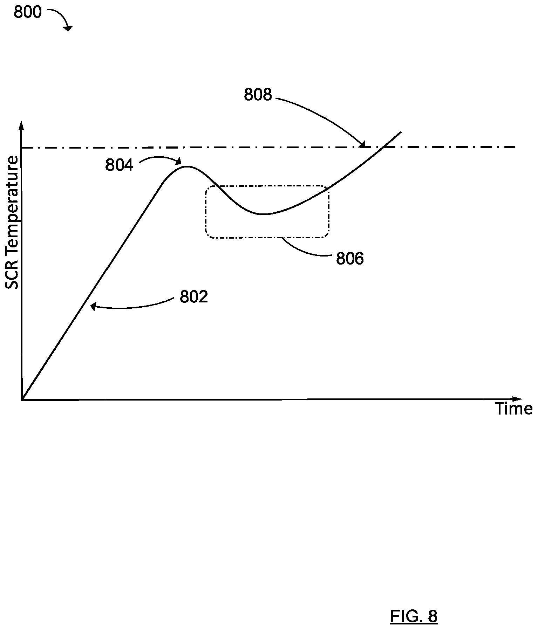

Conventionally, the electric pre-heat device heats the SCR. Newer systems however include other upstream elements in the exhaust flow in addition to the SCR, such as a filter that can reduce separate emission constituents. As a result, a pre-heated SCR device may experience a dip in temperature as the hot exhaust gas is actually cooled as it transits the high-surface area filters upstream (see e.g. as shown in FIG. 8).

Another conventional solution is to use electrical mesh heating within a component in the exhaust airflow. This solution is disadvantageous because of the high thermal mass of the SCR device, and its requirement for the exhaust airflow to transfer the heat. These solutions function only after the ignition of the attached combustion device.

In a pre-heat system for an emission reduction device that includes a filter and an SCR device, after engine start there is a dip in the SCR temperature as the hot exhaust gas is actually cooled by the high-surface area filters upstream of the SCR device.

The exhaust gas, now at a lower temperature interacts with the SCR catalyst and temporarily reduces the temperature of the SCR device. This is an important issue because every moment the SCR device is below its "activation temperature", it cannot catalyze the reaction required to reduce emissions.

The SCR devices are generally designed as corrugates structures with many layers and are generally made of ceramic. They have a high thermal mass, and due to their design direct heating is unsuitable because of the length of time required to bring them up to temperature. Direct heating in this manner would generally use electrical heating, and the high-voltage requirements to provide heat are similarly unsuitable for this application.

It is an object of the present invention to provide improved systems and methods for pre-heating an emissions control device that includes both upstream elements (such as a filter, ceramic element, silencer, etc.) and an SCR catalyst device. The improved pre-heat operation is that when the boiler, generator or reciprocating engine is started up, the SCR catalyst reaches its activation temperature more quickly and the temperature "upstream element dip" of the SCR device by the upstream elements is mitigated. As a result, the SCR device used within the application reduces NOx particles more quickly and efficiently compared to an application that does not utilize the pre-heat system.

### SUMMARY

The present embodiments are directed to an improved pre-heat system to achieve faster catalyst activation after engine start. The improved activation allows for compliance with the most stringent air permits. The improved pre-heat system also addresses issues with upstream elements such as particulate filters that may be provided upstream of an SCR device. Reducing the heat-up time can also help relax the overall percentage of NOₓ reduction and stack height.

In a first aspect, there is provided a pre-heat system, comprising: a heating unit for providing heat to an upstream element and a Selective Catalytic Reduction (SCR) device in an exhaust airflow of a combustion device; and a controller operatively connected to the heating unit, the controller configured to engage the heating unit prior to the initiation of the combustion device to permit a pre-heating of the upstream element and a pre-heating of the SCR device.

In one or more embodiments, the heating unit may comprise: an air blower; a heater in fluid communication with the air blower; and a valve in fluid communication with the heater, the valve comprising an input, a first outlet for providing a first pre-heating airflow for the pre-heating of the upstream element and a second outlet for providing a second pre-heating airflow for the pre-heating of the SCR device; wherein the controller controls the air blower, the heater, and the valve.

In one or more embodiments, the valve may comprise a modulating valve.

In one or more embodiments, the heating unit may comprise: a first air blower; a first heater in fluid communication with the first air blower, an outlet of the first heater for providing a first pre-heating airflow for the pre-heating of the upstream element; a second air blower; a second heater in fluid communication with the second air blower, an outlet of the second heater for providing a second pre-heating airflow for the pre-heating of the SCR device; and wherein the controller may control the first air blower, the first heater, the second air blower and the second heater.

In one or more embodiments, the controller may further comprise a network device operatively connected to the controller, the network device for receiving an indication of the initiation of the combustion device.

In one or more embodiments, the controller may be further configured to determine a pre-heat schedule based on at least the received indication.

In one or more embodiments, the system may further comprise: at least one SCR temperature sensor, the at least one SCR temperature sensor operatively connected to the controller and positioned at the SCR device, the at least one SCR temperature sensor for providing an SCR temperature value; and wherein the controller may control each of the air blower, the heater unit and the valve based on the SCR temperature value.

In one or more embodiments, the system may further comprise: at least one upstream temperature sensor, the at least one upstream temperature sensor operatively connected to the controller and positioned at the upstream element, the at least one upstream temperature sensor for providing an upstream element temperature value; and wherein the controller may control each of the air blower, the heater unit and the valve based on the SCR temperature value and the upstream element temperature value.

In one or more embodiments, the upstream element may be selected from a group consisting of at least one of: a particulate filter, a ceramic element, and a silencer.

In one or more embodiments, the system may further comprise: a flow regulator in fluid communication with the heater unit and operatively connected with the controller, the flow regulator for measuring temperature at the heater outlet and restricting the flow of air through the heater; and wherein the controller may be further adapted for providing a control signal to the flow regulator.

In one or more embodiments, the flow regulator may comprise a modulating valve.

In one or more embodiments, the heater may be a variable power heater.

In a second aspect there is provided a pre-heat method for a combustion device, comprising: obtaining an engagement signal from a controller operatively connected to an heating unit; and heating, using the heating unit, an upstream element and a Selective Catalytic Reduction (SCR) device in an exhaust flow of the combustion device; wherein the engagement signal is sent prior to initiation of the combustion device.

In one or more embodiments, the heating may comprise: an air blower obtaining a blower signal from the controller; a heater in fluid communication with the air blower obtaining a heater signal from the controller; generating a heating airflow using the heater and the air blower; providing the generated heating airflow through a valve comprising a first outlet for providing a first heating airflow to thereby heat the upstream element and a second outlet for providing a second heating airflow to thereby heat the SCR device.

In one or more embodiments, the valve may comprise a modulating valve.

In one or more embodiments, the generating the heating airflow may comprise: a first air blower obtaining a first blower signal from the controller; a first heater in fluid communication with the first air blower obtaining a first heater signal from the controller; generating a first pre-heating airflow for pre-heating the upstream element using the first heater and the first air blower; delivering the first pre-heating airflow at the upstream element; a second blower obtaining a second blower signal from the controller; a second heater in fluid communication with the second air blower obtaining a second heater signal from the controller; generating a second pre-heating airflow for pre-heating the SCR device using the second heater and the second air blower; and delivering the second pre-heating airflow at the SCR device.

In one or more embodiments, the method may further comprise: obtaining an indication of the initiation of the combustion device.

In one or more embodiments, the method may further comprise: determining using the controller a pre-heat schedule based on the received indication.

In one or more embodiments, the method may further comprise: obtaining an SCR temperature value from at least one SCR temperature sensor positioned at the SCR device and operatively connected to the controller, further wherein the controller is configured to control each of the air blower, the heater unit and the valve based at least on the SCR temperature value.

In one or more embodiments, the method may further comprise: obtaining an upstream element temperature value from at least one upstream temperature sensor positioned at the upstream element and operatively connected to the controller, further wherein the controller is configured to control each of the air blower, the heater unit and the valve based on the SCR temperature value and the upstream element temperature value.

In a third aspect there is provided an emissions control device for a combustion device, comprising: a Selective Catalytic Reduction (SCR) device for reducing emissions in an exhaust airflow from the combustion device; an upstream element positioned upstream of the SCR device in the exhaust airflow; a heating unit for providing heat to the upstream element and the Selective Catalytic Reduction (SCR) device; a controller operatively connected to the heating unit, the controller configured to engage the heating unit prior to the initiation of the combustion device to permit a pre-heating of the upstream element and a pre-heating of the SCR device; and a housing containing the SCR membrane and the upstream element, the housing configured for pre-heating using the heating unit and the controller.

In one or more embodiments, the upstream element may be selected from a group consisting of at least one of: a particulate filter, a ceramic element, and a silencer.

### DRAWINGS

FIG. 1 shows a perspective drawing of an exhaust system in fluid communication with a combustion device in accordance with one or more embodiments.
FIG. 2 shows a system diagram of an exhaust system in accordance with one or more embodiments.
FIG. 3 shows a detail view of the exhaust system of FIG. 2 in accordance with one or more embodiments.
FIG. 4 shows another system diagram of an exhaust system in accordance with one or more embodiments.
FIG. 5 shows a detail view of the exhaust system of FIG. 4 in accordance with one or more embodiments.
FIG. 6 shows a system diagram for the control system 600 for the pre-heat system of FIGs. 4 to 5 in accordance with one or more embodiments.
FIG. 7 shows another system diagram of an exhaust system in accordance with one or more embodiments.
FIG. 8 shows a temperature diagram of an SCR device during and after pre-heating using a conventional pre-heating system.
FIG. 9 shows a method diagram of a pre-heating method in accordance with one or more embodiments.

### DESCRIPTION OF VARIOUS EMBODIMENTS

Various embodiments will now be described below to provide an example of the claimed subject matter. No example described below limits any claimed subject matter and any claimed subject matter may cover embodiments such as systems or methods that differ from those described below.

Furthermore, it will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term if this deviation would not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed.

Some elements herein may be identified by a part number, which is composed of a base number followed by an alphabetical or subscript-numerical suffix (e.g., 112a, or 112₁). Multiple elements herein may be identified by part numbers that share a base number in common and that differ by their suffixes (e.g., 112₁, 112₂, and 112₃). All elements with a common base number may be referred to collectively or generically using the base number without a suffix (e.g., 112).

The present invention is a system for pre-heat of catalysts in a selective catalytic reduction (SCR) device that include upstream elements such as particulate filters.

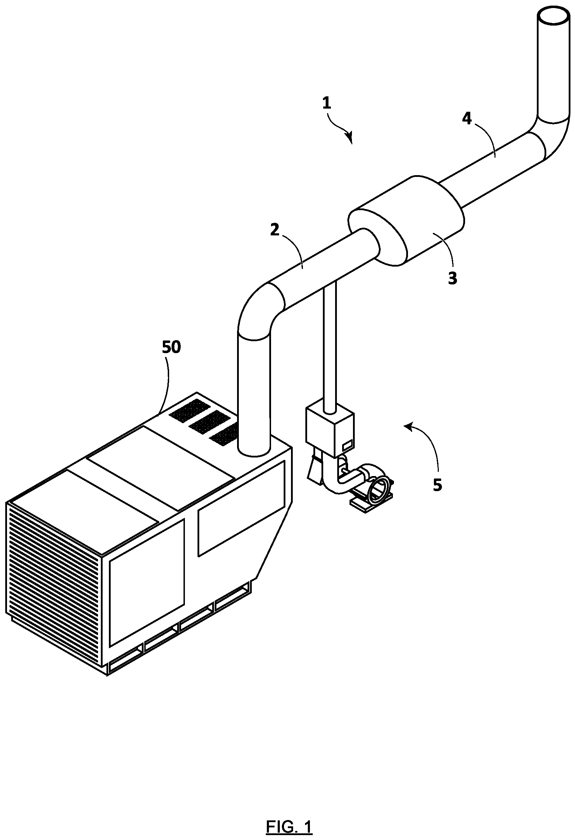

Referring first to FIG. 1, there is shown a perspective drawing of an exhaust system 1 in fluid communication with a combustion device 50 in accordance with one or more embodiments. The exhaust system 1 includes an inlet duct 2 receiving exhaust from the combustion device 50, a selective catalytic reduction (SCR) device 3 in fluid communication with the inlet duct 2, a pre-heat system 5 in fluid communication with the exhaust system 1, and an outlet duct 4 receiving fluid communication from the SCR device. The combustion device 50 may be a boiler, generator or an internal combustion engine

The pre-heat system 5 is in fluid communication with an exhaust system 1 as the exhaust system 1, which generally discharges an unpurified exhaust-gas flow from a combustion device 50, comprises the SCR device 3, an inlet duct 2, and an outlet duct 4. The inlet duct 2 is in fluid communication with the SCR device 3, and the outlet duct 4 is in fluid communication with the SCR device 3 opposite of the inlet duct 2 so that the SCR device 3 can function as an emission controlling device within the exhaust system 1. The SCR device 3 transforms nitrogen oxides (NOₓ) of the unpurified exhaust-gas flow into diatomic nitrogen (N₂) and water vapor with the aid of the catalyst and the reductant agent. More specifically, the reductant agent is added to the unpurified exhaust-gas flow with a reductant injector of the SCR device 3 so that the reductant agent can perform a chemical reaction with the NOₓ, in order to convert the NOₓ, into N₂ and water vapor.

The pre-heat system 5 provided herein may pre-heat the SCR device 3 both ahead of the ignition of the combustion device 50, and in the immediate period following the ignition when the SCR device 3 is below an activation temperature for reducing emissions.

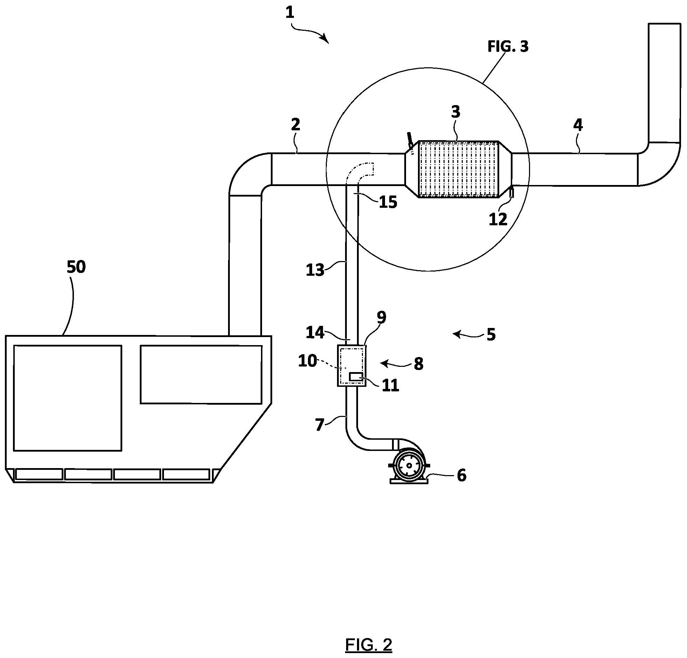

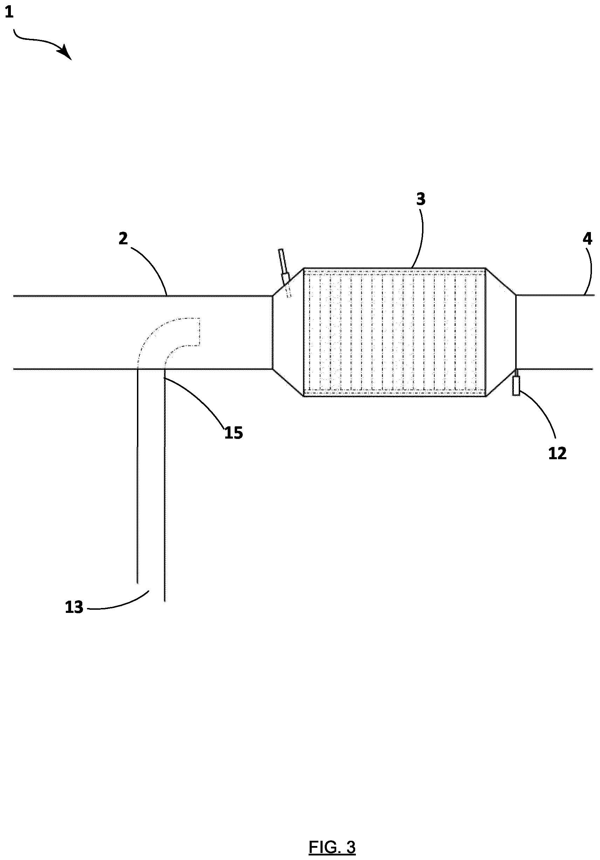

The first aspect of the pre-heat system in FIGs. 2 and 3 generally shows an emission reduction device including an SCR device 3 without an upstream element.

The pre-heat system in FIGs. 2 and 3 operates primarily before the combustion device 50 starts in order to ensure the SCR device 3 is appropriately heated (as described further in FIG. 8) and the pre-heat system may continue to operate after the combustion device starts.

Referring next to FIG. 2, there is shown a system diagram of exhaust system 1 in accordance with one or more embodiments. The combustion device 50 is connected to SCR device 3 via inlet duct 2. The pre-heat system 5 is in fluid communication with the inlet duct 2 and positioned adjacent to the SCR device 3 so that the pre-heat system 5 is able to supply a hot-air flow to the exhaust system 1. The pre-heat system 5 comprises an air blower 6, an interconnecting pipe 7, a heater unit 8, and a heat supply pipe 13. The heat supply pipe 13 receives air blown by air blower 6 heated by heater unit 8 through the interconnecting pipe 7. The combined functionality of the air blower 6 and the heater unit 8 generates the hot-air flow within the pre-heat system 5. More specifically, the air blower 6 generates a sufficient air flow for the pre-heat system 5 so that the air flow can be discharged into the heater unit 8 through the interconnecting pipe 7. Then the heater unit 8 is able to elevate the temperature of the air flow so that the hot-air flow can be generated within the heater unit 8.

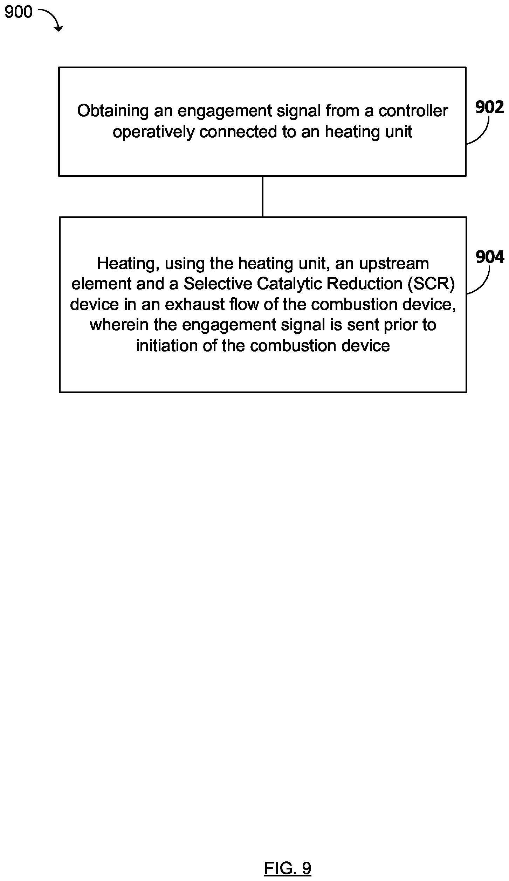

The heater unit 8 comprises a housing 9, a heating element 10, and a controller 11. The controller 11 may be a thermostat. The controller 11 may include a processor, memory, network, and input and output ports. The processor of the controller may operate the method of FIG. 9. At least one temperature sensor 12 is provided at the outlet of SCR device 3. The heating element 10 may be an electric heater which transfers thermal energy to elevate the temperature for the air flow of the air blower 6, is internally positioned with the housing 9 so that the housing 9 is able to isolate the heating element 10 from the surrounding environment. In order to facilitate in fluid communication of the interconnecting pipe 7 and heater unit 8, the interconnecting pipe 7 is traversed into the housing 9 creating a generally hermetic connection between the interconnecting pipe 7 and the housing 9.

In another embodiment, heater unit 8 and heating element 10 may use additional methods of heat transfer that don't rely on air moving directly over heating element 10. For example, heater unit may use thermal conduction or passive convection to deliver heat from heating element 10 to the SCR. This may reduce or eliminate the number of moving parts and limit the maintenance requirements on a pre-heat system in situations where the SCR temperature may be maintained in a "ready" state for a significant portion of the time.

Referring to FIG. 2 and FIG. 3 together, the controller 11 that controls the functionality of the heating element 10 may be externally positioned with the housing 9 so that the users can easily change the desired temperature setting for the controller 11. The controller 11 may be a thermostat. In an alternate embodiment, the controller 11 may be in network communication and may be remotely configurable. For example, the controller 11 can be a physically separated device or can be implemented in software on a programmable device. Since the hot-air flow is required to enter into the SCR device 3 for the functionality of the present invention, the heater unit 8 is in fluid communication with the exhaust system 1 through the heat supply pipe 13 opposite of the air blower 6. More specifically, a first end 14 of the heat supply pipe 13 is traversed into the housing 9 while a second end 15 of the heat supply pipe 13 is in fluid communication with the inlet duct 2 and positioned adjacent to the SCR device 3. In both of the above instances, the first end 14 and the second end 15 of the heat supply pipe 13 respectively create generally hermetic connections between the housing 9 and the inlet duct 2. The generally hermetic connections of the interconnecting pipe 7 and the heat supply pipe 13 are able to maintain higher efficiency level for the pre-heat system 5 as the air flow loss and the hot-air flow loss are minimized from the pre-heat system 5.

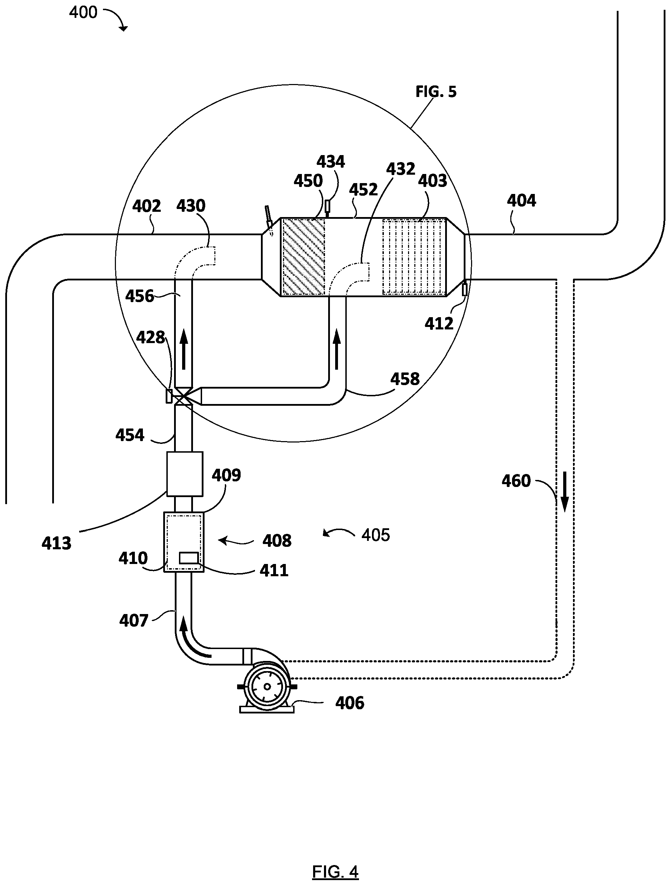

In a second aspect of the pre-heat system in FIGs. 4 to 8, an SCR device is shown in conjunction with upstream elements such as a particulate filter. Like references in FIGs. 4 to 8 correspond to like references in FIGs. 2 to 3. For example, air blower 406 corresponds to air blower 6 (see e.g. FIG. 2).

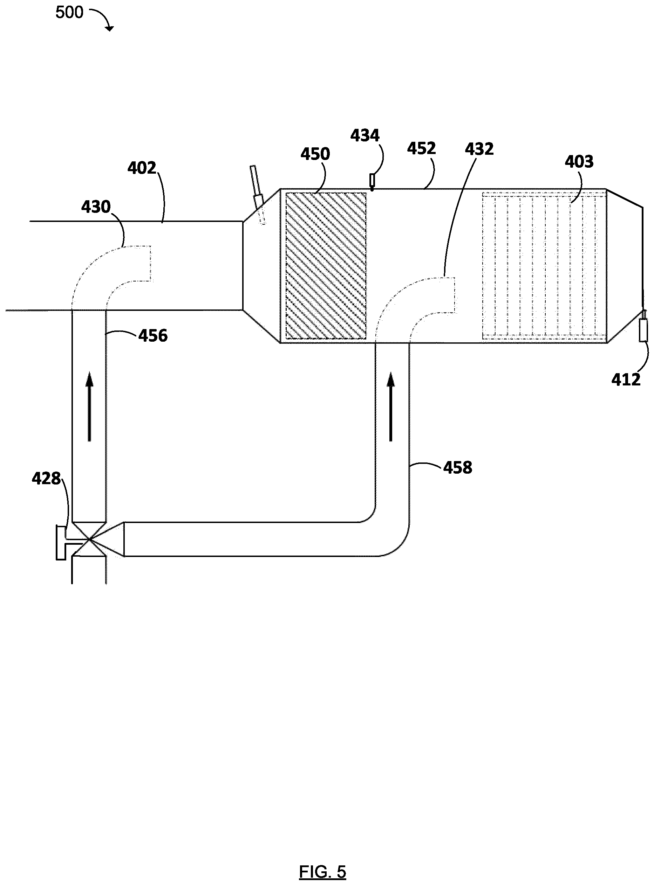

Referring next to FIGs. 4 and 5 together, there is shown a pre-heat system for an emissions reduction device 452 including one or more upstream elements 450 and SCR device 403 including a portion view in FIG. 5 as shown in accordance with one or more embodiments. The one or more upstream elements 450 may include a filter such as a diesel particulate filter, a ceramic element, a silencer, or another device positioned in the exhaust airflow upstream from the SCR device 403.

The blower 406 of pre-heat system 400 provides an airflow independent of the exhaust airflow from the combustion device. This provides for pre-heating of the upstream element 450 and the SCR device 403 independently from the operation of the combustion device.

The pre-heat system 400 in FIGs. 4 and 5 operates primarily before the attached combustion device starts in order to ensure the upstream elements 450 and SCR device 403 is appropriately heated (as described further in FIG. 8) and the pre-heat system may continue to operate after the combustion device starts. That is, the pre-heat system 400 may pre-heat the SCR device 403 and the upstream device 450 ahead of the ignition of the attached combustion device, and in the immediate period following the ignition when the SCR device 403 and the upstream device 450 are below the steady-state operational temperatures.

The SCR device 403 may be an SCR catalyst, for example a commercial catalytic product which accelerates the destruction of NOx. This may include, for example, through the use of a reductant (e.g. anhydrous ammonia (NH₃), aqueous ammonia (NH₄OH), or a urea (CO(NH₂)₂) solution.

The diesel particulate filter (DPF) that is part of the upstream elements 450 may be a DPF substrate may be a commercial particulate filter product integrated into the emission systems. For example, the DPF may be the same type as those used in other transportation applications. The DPF composition may be, for example, a Wall-Flow Monolith type diesel particulate filter. In an alternate embodiment, the upstream element 450 may be a ceramic element, silencer, etc.

The upstream elements 450 may include an upstream within an emissions control device 452. In an alternate embodiment, the upstream element 450 may be independent from and upstream of the emissions control device 452, for example, an independent upstream device (not shown) connected within the inlet duct 402. The upstream device may include the upstream element and the emission control device 452 may include SCR device 403. The emission control device 452 may be independent from the upstream device. The first heating airflow provided at first outlet 430 may be provided ahead of the upstream device and the second heating airflow provided at second outlet 432 may be provided ahead of the emission control device 452 containing the SCR device 403.

FIG. 4 shows a system diagram of exhaust system 400 in accordance with one or more embodiments. The combustion device (not shown) is connected to the emissions reduction device 452 via inlet duct 402. The pre-heat system 405 is in fluid communication with the inlet duct 402 via first outlet 430, as well as the emission reduction device 452 via second outlet 432 and positioned adjacent to the emission control device 452 so that the pre-heat system 405 is able to supply a hot-air flow to the exhaust system 400, as provided in the pre-heat method of FIG. 9.

The pre-heat system 405 comprises an air blower 406, an interconnecting pipe 407, a heater unit 408, a heat supply pipe 454, a modulating valve 428, a upstream element heat supply pipe 456 including an first heat supply outlet 430, an SCR heat supply pipe 458 including a second heat supply outlet 432.

In another embodiment, the pre-heat system 405 may include a flow regulator 413.

The combined functionality of the air blower 406 and the heater unit 408 generates the hot-air flow within the pre-heat system 405. More specifically, the air blower 406 generates a sufficient air flow for the pre-heat system 405 so that the air flow can be discharged into the heater unit 408 through the interconnecting pipe 407. Then the heater unit 408 is able to elevate the temperature of the air flow so that the hot-air flow can be generated within the heater unit 408.

The heat supply pipe 454 receives air blown by air blower 406 heated by heater unit 408 through the interconnecting pipe 407. The modulating valve 428 is in fluid communication with the upstream element heat supply pipe 454 and the SCR heat supply pipe 458. The modulating valve 428 may operate to adjust the relative flow of heated air through the first supply outlet 430 and the SCR heat supply pipe 458 received from the heat supply pipe 454. The modulating valve 428 may be actuated by a controller 411 in response to changes in the temperatures collected at the upstream element temperature sensor 434 and the SCR temperature sensor 412. The controller 411 may be a thermostat. The controller 11 may include a processor, memory, and input and output ports. The processor of the controller may operate the method of FIG. 9.

The heater unit 408 comprises a housing 409, a heating element 410, and a controller 411. At least one SCR temperature sensor 412 is provided at the outlet of emission reduction device 452 at SCR device 403. Separately, another at least one upstream element temperature sensor 434 may be provided at the outlet side of the upstream elements 450. The heating element 410, which transfers thermal energy to elevate the temperature for the air flow of the air blower 406, is internally positioned with the housing 409 so that the housing 409 is able to isolate the heating element 410 from the surrounding environment. In order to facilitate in fluid communication of the interconnecting pipe 407 and heater unit 408, the interconnecting pipe 407 is traversed into the housing 409 creating a generally hermetic connection between the interconnecting pipe 407 and the housing 409.

In another embodiment, heater unit 408 and heating element 410 may use additional methods of heat transfer that don't rely on air moving directly over heating element 410. For example, heater unit may use thermal conduction or passive convection to deliver heat from heating element 410 to the SCR. This may reduce or eliminate the number of moving parts and limit the maintenance requirements on a pre-heat system in situations where the SCR temperature may be maintained in a "ready" state for a significant portion of the time.

In another embodiment, heater element 410 may be upstream of a flow regulator 413 that may modulate the amount of airflow from the heater element 410 to the valve 428. For example, flow regulator 413 may take the form of a modulating valve that may operate to adjust the relative flow of air through the heater element 410. The flow regulator 413 may itself measures temperature at the heater element 410 outlet and may restrict the flow of air through the heater by means of the valve. The valve at flow regulator 413 being open may tend to cool the heater, and in a partially closed position the valve at flow regulator 413 may cause an increase of the heater temperature by slowing the airflow through the heater elements 410.

The control of the flow regulator 413 may be accomplished using controller 411, similar to the heater element 410, blower 406, and modulating valve 428. The flow regulator 413 may be actuated by the controller 411 in response to changes in the temperatures collected at the upstream element temperature sensor 434 and the SCR temperature sensor 412.

Referring to FIG. 4 and FIG. 5 together, the controller 411 that controls the functionality of the heating element 410, the blower 406, and the valve 428 may be externally positioned with the housing 409 so that the users can easily change the temperature set point setting for the controller 411. The controller 411 may be in network communication and may be remotely configurable. For example, the controller 411 can be a physically separated device or can be implemented in software on a programmable device.

The controller 411 may be in network communication with network 462 using network device 460. The user device 464 may send and receive signals to the controller 411 over network 462 using network device 460.

Network 462 may be any network or network components capable of carrying data including the Internet, Ethernet, fiber optics, satellite, mobile, wireless (e.g. Wi-Fi, WiMAX), SS7 signaling network, fixed line, local area network (LAN), wide area network (WAN), a direct point-to-point connection, mobile data networks (e.g., Universal Mobile Telecommunications System (UMTS), 3GPP Long-Term Evolution Advanced (LTE Advanced), Worldwide Interoperability for Microwave Access (WiMAX), etc.) and others, including any combination of these.

The one or more user devices 464 may be used by a user such as an maintenance administrator to communicate with the controller 411 and control the operation of the pre-heat system.

A software application (not shown) may be used to access the controller 411.

In one embodiment, a user of the one or more user devices 464 may access the web application hosted at controller 411 using a browser.

The one or more user devices 464 may be any two-way communication device with capabilities to communicate with other devices. A user device 464 may be a desktop computer, mobile device, or laptop computer. A user device 464 may be a mobile device such as mobile devices running the Google^{®} Android^{®} operating system or Apple^{®} iOS^{®} operating system. A user device 464 may be the personal device of a user, or may be a device provided by an employer.

The software application running on the one or more user devices 464 may display one or more user interfaces on a display device of the user device. This may include one or more maintenance interfaces.

The user at user device 464 may transmit a pre-heat signal to the controller 411 via network device 460. The pre-heat signal may be an immediate request to initiate a pre-heating event for the attached combustion device 50 (e.g. FIGs. 1-2). The pre-heating event may initiate the controller 411 to control the pre-heat system to begin pre-heating the SCR device 403 and the upstream element 450 according to a pre-determined schedule. The pre-heat signal may further include a scheduled request to pre-heating event for the SCR device 403 and the upstream device 450 attached combustion device 50 (e.g. FIGs. 1-2) in the future. For example, a user at user device 464 may have a testing window scheduled for the combustion device 50 at a particular scheduled time, and may send a scheduled request to the controller 411 to begin pre-heating the SCR device 403 and the upstream element 450 ahead of the particular scheduled time. In both cases, the controller 411 may include a predetermined "soak time" that it may run prior to the initiation of the combustion device 50 and during it's initial startup to ensure that the SCR device 403 and the upstream device 450 are pre-heated.

The controller 411 may control the functionality of the heating element 410, the air blower 406, and the modulating valve 428 based on the method of FIG. 9.

The heater unit 408 is in fluid communication with the exhaust system 400 through the heat supply pipe 454, modulating valve 428, upstream element heat supply pipe 456 and SCR heat supply pipe 458 opposite of the air blower 406. More specifically, a first end of the heat supply pipe 454 is traversed into the housing 409 while a second end of the heat supply pipe 454 is in fluid communication with the upstream element heat supply pipe 456 and SCR heat supply pipe 458 via modulating valve 428 and positioned adjacent to the emission reduction device 452. In both of the above instances, the first end and the second end of the heat supply pipe 454, as well as the modulating valve, upstream element heat supply pipe 456 and SCR heat supply pipe 458 respectively create generally hermetic connections between the housing 409, the inlet duct 2 (with respect to the upstream element heat supply pipe 456) and the emission reduction device 452 (with respect to the SCR heat supply pipe 458). The generally hermetic connections of the interconnecting pipe 407 and the heat supply pipe 454 are able to maintain higher efficiency level for the pre-heat system 405 as the air flow loss and the hot-air flow loss are minimized from the pre-heat system 405.

Optionally, the intake airflow for the air blower 406 may be drawn from a recirculation pipe 460 in fluid communication with the outlet duct 404.

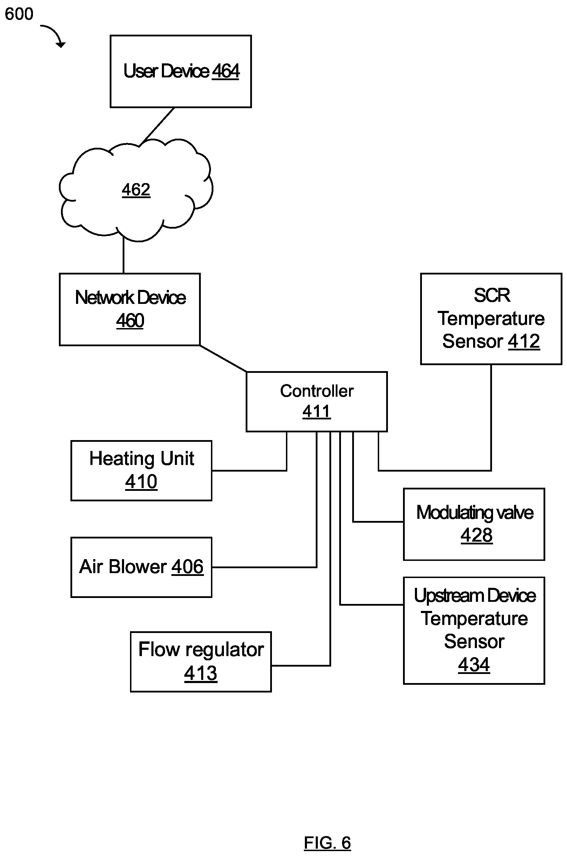

Referring next to FIG. 6, there is shown a system diagram for the control system 600 for the pre-heat system of FIGs. 4 to 5. The air blower 406, the heating element 410, the modulating valve 428, the network device 460 and the flow regulator 413 may be electrically connected with the controller 411 so that the controller 411 is able to control the operation of the air blower 406, the heating element 410, the flow regulator 413, and the modulating valve 428 within the pre-heat system 405. For example, the controller 411 may send control signals independently, or collectively, to each of the valve 428, the heater unit 410, the flow regulator 413, the modulating valve 428 and the air blower 406. The heating element 410 can be powered from an external power source, wherein the external power source can include, but not limited to, electric power and fossil fuel power. The at least one SCR temperature sensor 412 is also electrically connected with the controller 411 as the at least one SCR temperature sensor 412 provides temperature readings to the controller 411 from an outlet of the SCR device 403. The at least one upstream element temperature sensor 434 is also electrically connected with the controller 411 as the at least one upstream element temperature sensor 434 provides temperature readings to the controller 411 from an outlet of the upstream elements 450. The at least one SCR temperature sensor 412 and the at least one upstream element temperature sensor 434 provides input to the controller 411 so that the controller 411 can automatically activate and deactivate the air blower 406 and the heating element 410, or automatically modulate the fan speed of the air blower 406 and the heating power of the heating element 410 to adjust the heated air supply. Furthermore, the at least one SCR temperature sensor 412 and the at least one upstream element temperature sensor 434 provides input to the controller 411 so that the controller 411 can automatically adjust the modulating valve 428 of the pre-heat system to change the relative heating air flow between the upstream elements 450 and the SCR device 403. In an alternate embodiment, the at least one SCR temperature sensor 412 and the at least one upstream element temperature sensor 434 provides input to the controller 411, and the controller 411 may automatically adjust the fan speed of the air blower 406, may automatically adjust the heating power of the heating element 410, may automatically adjust the flow regulator 413, and may automatically adjust the modulating valve 428 in order to manage the pre-heating of the upstream elements 450 and the SCR device 403.

The at least one SCR temperature sensor 412 is traversed into the outlet duct 404 and positioned adjacent to the SCR device 403 so that the at least one SCR temperature sensor 412 is able to measure the downstream temperature of exhaust gas flow or the hot-air flow of the SCR device 403 of the exhaust system 400.

The at least one upstream element temperature sensor 434 is traversed into the emission reduction device 452 and positioned adjacent to the upstream elements 450 so that the at least one upstream element temperature sensor 434 is able to measure the downstream temperature of exhaust gas flow or the hot-air flow of the upstream elements 450 of the exhaust system 400.

The discharging process of the unpurified exhaust-gas flow can be directly or indirectly implemented by the controller 411 once the activation temperature is detected (see e.g. activation temperature 808 in FIG. 8) at the SCR temperature sensor 412 at the SCR device 403. For example, the controller 411 may automatically start the boiler, the generator, or the reciprocating engine in order to discharge the unpurified exhaust-gas flow as the controller 411 electrically connects with a starter unit of the boiler, the generator, or the reciprocating engine. Additionally, the controller 411 can also function as an indicating device so that the boiler, the generator, or the reciprocating engine can be manually started by the respective operators at any time even if the controller 411 does not reach its preset temperature.

In one embodiment of the invention, when the unpurified exhaust-gas flow is discharged into the inlet duct 402, the controller 411 deactivates the air blower 406 and the heating element 410 as the catalyst no longer requires the hot-air flow from the pre-heat system 405. This is mainly due to the fact that the elevated temperature of the unpurified exhaust-gas flow is sufficient enough to maintain the activation temperature. Then the SCR device 403 is able to efficiently convert the unpurified exhaust-gas flow into the purified exhaust-gas flow by eliminating the NOₓ,. Since the catalyst of the SCR device 403 is at the activation temperature 808 (see e.g. FIG. 8) when the unpurified exhaust gas flow is discharged into the exhaust system 400, the SCR device 403 is able to maximize its functionality without any lag time. Then the purified exhaust-gas flow can be safely released into the atmosphere through the outlet duct 404.

In another embodiment of the invention, when the unpurified exhaust-gas flow is discharged into the inlet duct 402, the controller 411 modulates the air blower 406, and the heating element 410 to provide supplementary heat if the temperature of the unpurified exhaust-gas flow is not sufficient enough to maintain the activation temperature. Then the SCR device 403 is able to efficiently convert the unpurified exhaust-gas flow into the purified exhaust-gas flow by eliminating the NOx. Since the catalyst of the SCR device 403 is at the activation temperature when the unpurified exhaust-gas flow is discharged into the exhaust system 400, the SCR device 403 is able to maximize its functionality without any lag time. Then the purified exhaust gas flow can be safely released into the atmosphere through the outlet duct 404.

In another embodiment of the invention, when the unpurified exhaust-gas flow is discharged into the inlet duct 402, the controller 411 modulates the air blower 406, the heating element 410, and the modulating valve 428 to provide supplementary heat if the temperature of the unpurified exhaust-gas flow is not sufficient enough to maintain the activation temperature. The supplemental heating may include an independently delivered supplementary upstream element heating airflow upstream of the upstream elements 450 from first heat supply outlet 430, as well as a supplementary SCR heating airflow upstream of the SCR device 403 from a second supply outlet 432. This may allow for differential heating of the upstream elements 450 and the SCR device 403 in order to efficiently heat the SCR device 403 to its activation temperature, and to maintain the temperature of the SCR device 403 at or above the activation temperature. Then the SCR device 403 is able to efficiently convert the unpurified exhaust-gas flow into the purified exhaust-gas flow by eliminating the NOₓ. Since the catalyst of the SCR device 403 is at the activation temperature when the unpurified exhaust-gas flow is discharged into the exhaust system 400, the SCR device 403 is able to maximize its functionality without any lag time. Then the purified exhaust gas flow can be safely released into the atmosphere through the outlet duct 404.

The controller 411 may measure a temperature of the SCR device 403 or the upstream element 450. Since the controller 411, the at least one SCR temperature sensor 412, and the at least one upstream temperature sensor 434 are electrically connected to each other, the controller 411 is able to retrieve the initial temperature of the SCR device 403 and the upstream element 450 respectively. If the initial temperature of the SCR device 403 is lower than the set point temperature of the SCR device 403, which is set by the user within the controller 411, the controller 411 then activates the air blower 406 and the heating element 410 in order to generate the hot-air flow as shown in FIGs. 4-5. Similarly, a second set point of the upstream elements may be provided by the user and used in order to control the pre-heating of the SCR device 403, the upstream element 450, or both. The hot-air flow increases the temperature of the upstream element and the catalysts in order to bring the temperature of the upstream elements and catalysts up to the desired temperature, which may be at the activation temperature 808 (see e.g. FIG. 8), slightly lower than the activation temperature if the user has concerns about the energy consumption of the pre-heat system, or slightly higher than the activation temperature. The pre-heating of the upstream element 450 may be performed to mitigate the "upstream dip" as described in FIG. 8. The activation temperature may be the minimum temperature requirement for the efficient functionality of the SCR device 403. The hot-air flow may be able to increase the temperature of the SCR device 403 to enable it to reach the activation temperature more quickly than if the SCR device 403 relied only on heating from the unpurified exhaust-gas flow from the upstream combustion device travelling in inlet duct 402. During this process, the controller 411 may continuously monitor a current temperature of the SCR device 403 through the at least one SCR temperature sensor 412 until the current temperature reaches the first set point temperature. Similarly, during this process, the controller 411 may continuously monitor a current temperature of the upstream element device 450 through the at least one upstream temperature sensor 412 until the current temperature reaches the second set point temperature. Then controller 411 may automatically deactivate or modulate the operation of the air blower 406, the heater unit 410, and the valve 428 as the unpurified exhaust-gas flow from the inlet duct 402 is released. Once the activation temperature of the SCR device 403 is reached, the unpurified exhaust-gas flow from the inlet duct 402 may be converted by the SCR device 403 to a purified exhaust-gas flow that exits through outlet duct 404.

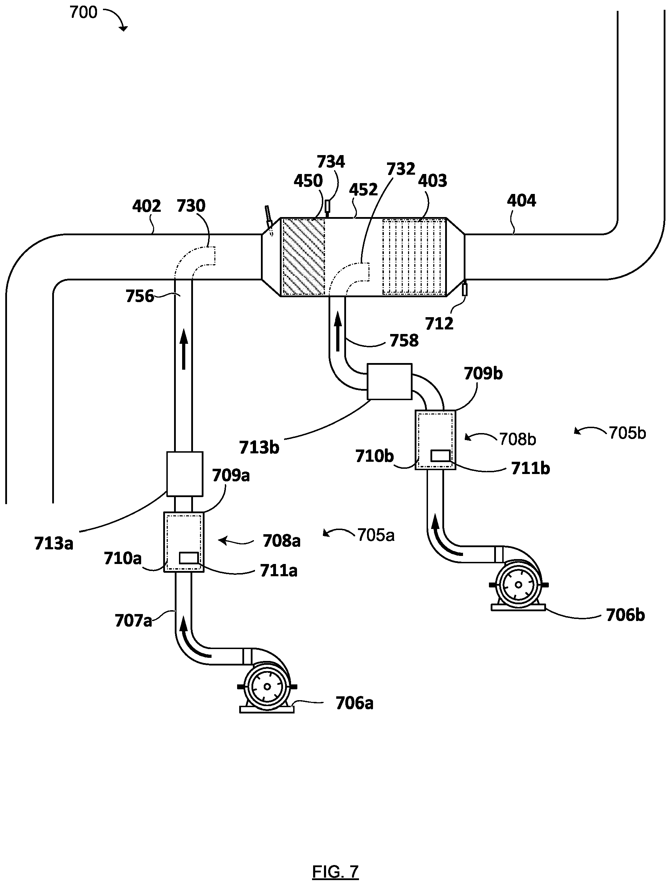

Referring next to FIG. 7, there is shown an alternate embodiment of the pre-heat system from FIG. 4 including two independent pre-heat systems 705a and 705b.

In one embodiment (FIGs. 4-5), the modulating valve 428 may enable partial flow from heater 408 through first outlet 430 and second outlet 432. This partial flow may be controlled, and may allow substantially all the heater airflow to exit through first outlet 430 to heat the upstream device 450, substantially all the heater airflow to exit through second outlet 432 to heat the SCR device 403, or a relative first airflow through first outlet 430 and a relative second airflow through second outlet 432 at the same time.

In the alternate embodiment shown in FIG. 7, the upstream element heat supply pipe 756 delivers heated air supply to the upstream elements 450 from pre-heat system 705a and the SCR heat supply pipe 758 delivers heated air supply to the SCR device 403 from an independent pre-heat supply 705b. The controller 711 may operate similar to the controller 411 (e.g. FIG 6), however instead of providing relative first and second airflows via the modulating valve, it may instead control the first blower 706a, first heater 708a and first valve 709a and the second blower 706b, second heater 708b and the second valve 713b to provide the first airflow from outlet 730 to pre-heat upstream element 450 and the second airflow from outlet 732 to pre-heat SCR device 403 respectively.

The first pre-heat system 705a includes the air blower 706a, flow regulator 713a, upstream element temperature sensor 734, and the heating element 710a are electrically connected with the controller 711a so that the controller 711a is able to control the operation of the air blower 706a, and the heating element 710a within the pre-heat system 705a. The flow regulator 713a may be the flow regulator 413 (e.g. FIG. 4).

The second pre-heat system 705b includes the air blower 706b, flow regulator 713b, SCR temperature sensor 712 and the heating element 710b are electrically connected with the controller 711b so that the controller 711b is able to control the operation of the air blower 706b, and the heating element 710b within the pre-heat system 705b. The flow regulator 713b may be the flow regulator 413 (e.g. FIG. 4).

In an alternate embodiment, a single controller (e.g. controller 711a) may perform the functions of both the first controller 711a and the second controller 711b. The first controller 711a may also be electrically connected to the air blower 706b, flow regulator 713b, SCR temperature sensor 712 and the heating element 710b.

Referring next to FIG. 8, there is shown a temperature diagram 800 of an SCR device during and after pre-heating using a conventional pre-heating system.

Once the current temperature of the SCR device 403 is equal to or greater than the activation temperature 808, then the unpurified exhaust-gas flow which is discharged by the combustion device through the inlet duct 402 can be purified.

Prior to the combustion device start 804 the pre-heat system is engaged to pre-heat 802 the emissions reduction device including an SCR device and a upstream element. SCR technology relies on a chemical reaction, which occurs between 300 - 500°C (570-930F) to reduce NOx, particles in the exhaust gas. Given the large thermal mass of the SCR catalyst, a certain heat-up time 802 is required to bring the catalyst up to the activation temperature before the emission reduction can begin.

Most emission regulations accept compliance at steady state, and in those cases, a potential 15-minute+ delay to achieve reductions is acceptable. However, certain air permits or other environmental controls may require a 1-hour average measurement. This is especially common in populated city centers or major source sites. In these applications, the catalyst activation delay can result in non-compliance of extremely restrictive maintenance run times. Conventionally, an electric pre-heat device heats the SCR.

Newer emissions reduction devices however include other upstream elements in the exhaust flow in addition to the SCR, such as a filter that can reduce separate emission constituents. As a result, a pre-heated SCR device may experience a dip 806 in temperature as the hot exhaust gas is actually cooled as it transits the high-surface area filters upstream. Using a conventional pre-heat system with additional elements upstream the SCR device, the presence of the upstream element within the emissions control device causes a temperature "upstream element dip" 806.

In this "upstream element dip" condition 806, the exhaust gas transiting the upstream elements, now at a lower temperature, interacts with the SCR catalyst device and temporarily reduces the temperature of the SCR device. This is an important issue because every moment the SCR device is below its "activation temperature" 808, it cannot catalyze the reaction required to reduce emissions.

Referring next to FIG. 9, there is shown a method diagram 900 of a pre-heat method for an emission reduction device comprising an upstream element and a selective catalytic reduction (SCR) device in accordance with one or more embodiments.

The method 900 provides for pre-heating using the pre-heating system.

Referring next to FIG. 9, there is shown a method diagram 900 of a pre-heat method for an emission reduction device comprising an upstream element and a selective catalytic reduction (SCR) device in accordance with one or more embodiments.

The method 900 provides for pre-heating using the pre-heating system.

At 902, obtaining an engagement signal from a controller operatively connected to an heating unit.

At 904, heating, using the heating unit, an upstream element and a Selective Catalytic Reduction (SCR) device in an exhaust flow of the combustion device; wherein the engagement signal is sent prior to initiation of the combustion device.

In one or more embodiments, the heating may comprise: an air blower obtaining a blower signal from the controller; a heater in fluid communication with the air blower obtaining a heater signal from the controller; generating a heating airflow using the heater and the air blower; providing the generated heating airflow through a valve comprising a first outlet for providing a first heating airflow to thereby heat the upstream element and a second outlet for providing a second heating airflow to thereby heat the SCR device.

In one or more embodiments, the valve may comprise a modulating valve.

In one or more embodiments, the generating the heating airflow may comprise: a first air blower obtaining a first blower signal from the controller; a first heater in fluid communication with the first air blower obtaining a first heater signal from the controller; generating a first pre-heating airflow for pre-heating the upstream element using the first heater and the first air blower; delivering the first pre-heating airflow at the upstream element; a second blower obtaining a second blower signal from the controller; a second heater in fluid communication with the second air blower obtaining a second heater signal from the controller; generating a second pre-heating airflow for pre-heating the SCR device using the second heater and the second air blower; and delivering the second pre-heating airflow at the SCR device.

In one or more embodiments, the method may further comprise: obtaining an indication of the initiation of the combustion device.

In one or more embodiments, the method may further comprise: determining using the controller a pre-heat schedule based on the received indication.

In one or more embodiments, the method may further comprise: obtaining an SCR temperature value from at least one SCR temperature sensor positioned at the SCR device and operatively connected to the controller, further wherein the controller is configured to control each of the air blower, the heater unit and the valve based at least on the SCR temperature value.

In one or more embodiments, the method may further comprise: obtaining an upstream element temperature value from at least one upstream temperature sensor positioned at the upstream element and operatively connected to the controller, further wherein the controller is configured to control each of the air blower, the heater unit and the valve based on the SCR temperature value and the upstream element temperature value.

The present invention has been described here by way of example only. Various modification and variations may be made to these exemplary embodiments without departing from the scope of the invention.

## Claims

1. A pre-heat system, comprising:
- a heating unit for providing heat to an upstream element and a Selective Catalytic Reduction (SCR) device in an exhaust airflow of a combustion device; and
- a controller operatively connected to the heating unit, the controller configured to engage the heating unit prior to the initiation of the combustion device to permit a pre-heating of the upstream element and a pre-heating of the SCR device.

2. The system of claim 1, wherein the heating unit comprises:
- an air blower;
- a heater in fluid communication with the air blower; and
- a valve in fluid communication with the heater, the valve comprising an input, a first outlet for providing a first pre-heating airflow for the pre-heating of the upstream element and a second outlet for providing a second pre-heating airflow for the pre-heating of the SCR device;
- wherein the controller controls the air blower, the heater, and the valve.

3. The system of claim 1, wherein the heating unit comprises:
- a first air blower;
- a first heater in fluid communication with the first air blower, an outlet of the first heater for providing a first pre-heating airflow for the pre-heating of the upstream element;
- a second air blower;
- a second heater in fluid communication with the second air blower, an outlet of the second heater for providing a second pre-heating airflow for the pre-heating of the SCR device; and
- wherein the controller controls the first air blower, the first heater, the second air blower and the second heater.

4. The system of any one of claims 1 to 3, wherein the controller further comprises a network device operatively connected to the controller, the network device for receiving an indication of the initiation of the combustion device, wherein the controller is further configured to determine a pre-heat schedule based on at least the received indication.

5. The system of any one of claims 2 to 4, further comprising:
- at least one SCR temperature sensor, the at least one SCR temperature sensor operatively connected to the controller and positioned at the SCR device, the at least one SCR temperature sensor for providing an SCR temperature value; and
- wherein the controller controls each of the air blower, the heater unit and the valve based on the SCR temperature value.

6. The system of claim 5, further comprising:
- at least one upstream temperature sensor, the at least one upstream temperature sensor operatively connected to the controller and positioned at the upstream element, the at least one upstream temperature sensor for providing an upstream element temperature value; and
- wherein the controller controls each of the air blower, the heater unit and the valve based on the SCR temperature value and the upstream element temperature value.

7. The system of any one of claims 1 to 6, wherein the upstream element is selected from a group consisting of at least one of: a particulate filter, a ceramic element, and a silencer.

8. The system of any one of claims 2 to 7, further comprising:
- a flow regulator in fluid communication with the heater unit and operatively connected with the controller, the flow regulator for measuring temperature at the heater outlet and restricting the flow of air through the heater; and
- wherein the controller is further adapted for providing a control signal to the flow regulator.

9. A pre-heat method for a combustion device, comprising:
- obtaining an engagement signal from a controller operatively connected to an heating unit; and
- heating, using the heating unit, an upstream element and a Selective Catalytic Reduction (SCR) device in an exhaust flow of the combustion device;
- wherein the engagement signal is sent prior to initiation of the combustion device.

10. The method of claim 9, wherein the heating comprises:
- an air blower obtaining a blower signal from the controller;
- a heater in fluid communication with the air blower obtaining a heater signal from the controller;
- generating a heating airflow using the heater and the air blower;
- providing the generated heating airflow through a valve comprising a first outlet for providing a first heating airflow to thereby heat the upstream element and a second outlet for providing a second heating airflow to thereby heat the SCR device.

11. The method of claim 9, wherein the generating the heating airflow comprises::
- a first air blower obtaining a first blower signal from the controller;
- a first heater in fluid communication with the first air blower obtaining a first heater signal from the controller;
- generating a first pre-heating airflow for pre-heating the upstream element using the first heater and the first air blower;
- delivering the first pre-heating airflow at the upstream element;
- a second blower obtaining a second blower signal from the controller;
- a second heater in fluid communication with the second air blower obtaining a second heater signal from the controller;
- generating a second pre-heating airflow for pre-heating the SCR device using the second heater and the second air blower; and
- delivering the second pre-heating airflow at the SCR device.

12. The method of any one of claims 9 to 11, further comprising:
- obtaining an indication of the initiation of the combustion device; and
- determining using the controller a pre-heat schedule based on the received indication.

13. The method of any one of claims 10 to 12, further comprising:
- obtaining an SCR temperature value from at least one SCR temperature sensor positioned at the SCR device and operatively connected to the controller,
- further wherein the controller is configured to control each of the air blower, the heater unit and the valve based at least on the SCR temperature value.

14. The method of any one of claims 10 to 13, further comprising:
- obtaining an upstream element temperature value from at least one upstream temperature sensor positioned at the upstream element and operatively connected to the controller,
- further wherein the controller is configured to control each of the air blower, the heater unit and the valve based on the SCR temperature value and the upstream element temperature value.

15. An emissions control device for a combustion device, comprising:
- a Selective Catalytic Reduction (SCR) device for reducing emissions in an exhaust airflow from the combustion device;
- an upstream element positioned upstream of the SCR device in the exhaust airflow;
- a housing containing the SCR membrane and the upstream element, the housing configured for pre-heating using the system of any one of claims 1 to 8, wherein the upstream element is selected from a group consisting of at least one of: a particulate filter, a ceramic element, and a silencer.
